# EUROPÄISCHE PATENTSCHRIFT

(11) **EP 3 783 290 B1**
(45) Veröffentlichungstag und Bekanntmachung des Hinweises auf die Patenterteilung: **05.07.2023**
(21) Anmeldenummer: 20186975.7
(22) Anmeldetag: 21.07.2020
(51) Int. Cl.: F25D 29/00, G06F 3/01

(54) **LED-KETTENELEKTRONIK FÜR EIN HAUSHALTSGERÄT, HAUSHALTSGERÄT UND VERFAHREN**
LED CHAIN ELECTRONICS FOR A DOMESTIC APPLIANCE, DOMESTIC APPLIANCE AND METHOD
ÉLECTRONIQUE DE CHAÎNE À LED POUR UN APPAREIL ÉLECTROMÉNAGER, APPAREIL ÉLECTROMÉNAGER ET PROCÉDÉ

(30) Priorität: 21.08.2019 DE 102019212466
(43) Veröffentlichungstag der Anmeldung: 24.02.2021
(73) Patentinhaber: BSH Hausgeräte GmbH, 81739 München (DE)
(72) Erfinder: Staud, Ralph, 81667 München (DE); Tischer, Thomas, 85540 Haar (DE); Kessler, Andreas, 81827 München (DE); Korte, Andreas, 81673 München (DE); Heidenfelder, Ingo, 82024 Taufkirchen (DE)

(56) Entgegenhaltungen:
- EP-A1- 2 043 407
- EP-A1- 2 392 859
- EP-A1- 3 330 617
- WO-A1-2017/071725
- DE-B3-102010 062 485

## Beschreibung

Die Erfindung betrifft eine LED-Kettenelektronik für ein Haushaltsgerät, mit mehreren berührungsempfindlichen, in einer Reihe angeordneten Bedienfeldern. Die Erfindung betrifft ferner ein Haushaltsgerät mit mindestens einer solchen LED-Kettenelektronik. Die Erfindung betrifft auch ein Verfahren zum Betreiben einer LED-Kettenelektronik. Die Erfindung ist anwendbar auf Haushaltskühlgeräte, speziell mit einem Kühlteil und einem Gefrierteil.

Zur Bedienung von Kühlschränken sind an einer Außenseite einer Kühlschranktür angeordnete Bedienfelder bekannt. Dabei ist es gewünscht, die zugehörige Fläche gering zu halten, ohne eine Bedienerfreundlichkeit zu verringern. Dies kann beispielsweise durch berührungsempfindliche TFT-Displays umgesetzt werden, bei denen sich die zu den Bedienfeldern gehörige angezeigte Information variabel einstellen lässt. Jedoch haben TFT-Displays den Nachteil, dass sie nach wie vor sehr teuer sind.

Zur Nutzung als Bedienfelder sind auch sog. LED-Kettenelektroniken bekannt. Dabei handelt es sich typischerweise um längliche oder bandförmige Streifen mit in Längserstreckung in Reihe angeordneten berührungsempfindlichen Bedienfeldern (auch als "Touchfelder" oder "Direct Touch"-Bedienfelder bezeichnet). Die Bedienfelder können als berührungsempfindliche Schichten oder Schichtstapel ausgebildet sein, die beispielsweise als induktive Näherungsschalter, kapazitive Näherungsschalter oder elektrische Kontaktschalter wirken. Die Bedienfelder sind mittels mindestens einer LED individuell hinterleuchtbar und beispielsweise mit einer Maske versehen, um jedem Bedienfeld eine fest vorgegebene Leuchtinformation zuzuordnen, z.B. in Form von Buchstaben, Zahlen, Symbolen usw. Anders als bei einem TFT-Display kann also bei einer LED-Kettenanzeigen jede Position nur mit einem bestimmten Anzeigefeld belegt werden. Als Träger einer LED-Kettenelektronik dient eine - steife oder biegsame - Leiterplatte oder Platine, auf der zusätzlich zu den berührungsempfindlichen Bedienfeldern und LEDs eine Schaltung oder Elektronik zur Auswertung der Bedienfelder auf Berührung, Ansteuerung der LEDs und ggf. Auslösen mindestens einer Aktion bei Berührung der Bedienfelder vorhanden ist.

Die WO 2017/071725 A1 offenbart eine Berührschalter für eine Bedienvorrichtung eines elektrischen Haushaltsgeräts.

Die EP 2 043 407 A1 offenbart eine Steuereinrichtung eines Haushaltsgeräts mit hintereinander angeordneten, bandförmigen Kettenelektroniken.

Die EP 3 330 617 A1 offenbart ein Kochfeld mit einer Kochfeldplatte mit unterhalb eines Längsstreifenbereichs und unter einer Bedienblende angeordneten Berührungssensoren, die nebeneinander in Längsrichtung des Längsstreifenbereichs angeordnet sind.

Die DE 10 2010 062485 B3 offenbart ein Verfahren zur Steuerung eines Geräts mit einer Bedieneinrichtung mit Bedienfläche.

Die EP 2 392 859 A1 offenbart ein Kochfeld mit individuell hinterleuchtbaren Bedienfeldern.

Typisch für eine LED-Kettenelektronik ist ein ausreichend großer Abstand zwischen den einzelnen Bedienfeldern, um eine ergonomische Bedienbarkeit zu gewährleisten. Hierfür wird bisher pro einstellbarem Betriebsparameter eine eigene LED-Kettenelektronik bereitgestellt, was bei mehreren einstellbaren Betriebsparametern einen immer noch großen Flächenbedarf zur Folge hat, und zwar entweder durch Erzeugung einer Bedienvorrichtung als langer Zeile mit mehreren hintereinander angeordneten LED-Kettenelektroniken oder als Anzeigefeld mit mehreren nebeneinander angeordneten LED-Kettenelektroniken. Es ist die **Aufgabe** der vorliegenden Erfindung, die Nachteile des Standes der Technik zumindest teilweise zu überwinden und insbesondere eine besonders kompakte und dennoch gut bedienbare sowie preiswerte LED-Kettenelektronik bereitzustellen, speziell für ein Haushaltsgerät.

Diese Aufgabe wird gemäß den Merkmalen der unabhängigen Ansprüche gelöst. Vorteilhafte Ausführungsformen sind Gegenstand der abhängigen Ansprüche, der Beschreibung und der Zeichnungen.

Die Aufgabe wird gemäß den Merkmalen des unabhängigen Anspruchs gelöst.

Diese LED-Kettenelektronik ergibt den Vorteil, dass sie bei besonders kompakter Außenform eine hohe Zahl von zuverlässig erkennbaren und betätigbaren Bedienfeldern bereitstellt und dennoch preiswert umsetzbar ist. So kann im Vergleich zu mehreren getrennt angeordneten LED-Kettenelektronik gleicher Funktionalität eine merkliche Verringerung der Grundfläche erreicht werden. Sie kann speziell auch an Stellen positioniert werden, an denen wenig Platz vorhanden ist. Zudem wird eine zeitgemäße Gestaltung mit dezenter Präsenz erreicht. Darüber hinaus ist eine solche LED-Kettenelektronik robust.

Es ist vorgesehen, dass ein Abstand zwischen übernächst benachbarten Einstellfeldern des gleichen Bedienstrangs (entlang der Längserstreckung der LED-Kettenelektronik) gleich oder größer als eine typische Fingerkontaktbreite ist und ein Abstand zwischen benachbarten Einstellfeldern des gleichen Bedienstrangs kleiner ist als die typische Fingerkontaktbreite. Dadurch wird besonders zuverlässig erreicht, dass eine kompakte Anordnung mit nutzfreundlicher Bedienung bereitgestellt wird. Durch den Abstand zwischen übernächst benachbarten Einstellfeldern des gleichen Bedienstrangs gleich oder größer als eine typische Fingerkontaktbreite wird nämlich erreicht, dass bei aktiviertem Bedienstrang nicht auch dazu benachbarte Einstellfelder anderer Bedienstränge ungewollt betätigt werden. Ist nur in eine Richtung noch ein Einstellfeld des gleichen Bedienstrangs vorhanden, kann die obige Bedingung auch so formuliert werden, dass ein Abstand von der Mitte des Einstellfelds zu dem Rand des benachbarten Einstellfelds des gleichen Bedienstrangs mindestens einer halben Fingerkontaktbreite entspricht. Dadurch, dass ein Abstand zwischen benachbarten Einstellfeldern des gleichen Bedienstrangs kleiner ist als die typische Fingerkontaktbreite, wird eine besonders kompakte Anordnung erreicht. Unter einer "typischen Fingerkontaktbreite" wird eine für einen Finger einer erwachsenen Person typische Ausdehnung einer Kontaktfläche mit der LED-Kettenelektronik entlang deren Längserstreckung bei Betätigung eines Bedienfelds verstanden.

Die typische Fingerkontaktbreite beträgt zwischen 15 mm und 20 mm.

Während eine Fingerkontaktbreite von 20 mm am oberen Ende einer mindestens benötigen Breite liegt, sind 15 mm eine untere Grenz der Bedienbarkeit für typische Finger einer erwachsenen Person.

Erfindungsgemäß ist jedem Bedienfeld ein jeweiliges Touchfeld zugeordnet ist oder benachbarten Einstellfeldern unterschiedlicher Bedienstränge das gleiche Touchfeld zugeordnet.

Erfindungsgemäß sind mehreren Selektionsfeldern das gleiche oder ein gemeinsames Touchfeld zugeordnet ist und mindestens eines der Selektionsfelder ist durch mehrfaches Betätigen des Touchfelds auswählbar. Ein Nutzer kann dann zwischen den angezeigten Selektionsfeldern durch mehrfaches Betätigen des Touchfelds nacheinander durchschalten oder "toggeln". Dabei wird das aktuell ausgewählte Selektionsfeld einem Nutzer durch helleres Leuchten angezeigt. Im letzteren Fall werden also mehrere Selektionsfelder als nacheinander durchschaltbare oder auswählbare Bedienfelder bereitgestellt.

Die LED-Kettenelektronik ist so eingerichtet, dass bestimmte nutzerauswählbare Bedienfelder für einen Nutzer sichtbar oder hervorgehoben sichtbar sind und durch direktes Betätigen (z.B. Berühren oder Drücken) eines nutzerauswählbaren Bedienfelds eine zugehörige, insbesondere fest vorgegebene, Funktion oder Aktion ausgelöst werden kann.

Die LED-Kettenelektronik und damit auch deren Bedienoberfläche ist insbesondere bandförmig geformt, insbesondere geradlinig, aber grundsätzlich z.B. auch gekrümmt, kreisförmig oder freiförmig. Die Bedienfelder sind entsprechend in einer Reihe entlang der Längserstreckung der LED-Kettenelektronik angeordnet, insbesondere sich nicht überlappend.

Dass die Bedienfelder mindestens zwei Selektionsfelder umfassen, bei dessen Betätigung zu einem gleichen Bedienstrang gehörige Einstellfeldern exklusiv durch einen Nutzer auswählbar werden, umfasst insbesondere, dass nur bei Betätigung eines bestimmten Selektionsfelds weitere Bedienfelder der LED-Kettenelektronik (die selbst keine Selektionsfelder sind) zur Auswahl durch einen Nutzer freigeschaltet werden. Dadurch, dass die Bedienfelder mindestens zwei Selektionsfelder umfassen, umfasst die LED-Kettenelektronik auch mindestens zwei Bedienstränge.

Dabei wird unter einen "Bedienstrang" ein Satz von Bedienfeldern umfassend ein Selektionsfeld und die bei Betätigung dieses Selektionsfelds nutzerauswählbaren Bedienfelder, die selbst keine Selektionsfelder darstellen, verstanden. Ein Bedienstrang umfasst mindestens ein exklusiv auswählbares Einstellfeld und kann auch mindestens ein wie weiter unten näher beschriebenes Kombinationsfeld umfassen. Die Bedienfelder eines Bedienstrangs stellen eine echte Teilmenge aller Bedienfelder der LED-Kettenelektronik dar. Unterschiedliche Bedienstränge unterscheiden sich in mindestens einem Bedienfeld, insbesondere in ihren Einstellfeldern. Es ist eine Weiterbildung, dass jeder der Bedienstränge mehrere Einstellfelder aufweist. Ein Einstellfeld dient zum Einstellen eines zugehörigen Geräts, insbesondere Haushaltsgeräts.

Dass die Einstellfelder unterschiedlicher Bedienstränge wechselweise nebeneinander angeordnet sind, umfasst insbesondere, dass sich Einstellfelder unterschiedlicher Bedienstränge entlang der bandförmigen Längserstreckung der LED-Kettenelektronik abwechseln. Liegen mehr als zwei Bedienstränge vor, können sich die Einstellfelder in immer der gleichen Reihenfolge abwechseln.

Da jedes Bedienfeld der LED-Kettenelektronik individuell hinterleuchtbar ist, können die jeweiligen Helligkeiten individuell eingestellt werden. Die Helligkeit umfasst mindestes drei unterschiedliche Helligkeitsniveaus: eine geringste Helligkeit, mittels der aktuell nicht nutzerauswählbare Einstellfelder hinterleuchtet werden, eine mittlere Helligkeit, mittels der aktuell nutzerauswählbare, aber nicht ausgewählte Einstellfelder hinterleuchtet werden und eine höchste Helligkeit, mittels der aktuell ausgewählte Einstellfelder hinterleuchtet werden. Dadurch wird der Vorteil erreicht, dass nutzerauswählbare und nutzerausgewählte Einstellfelder optisch deutlich von nicht auswählbaren Einstellfeldern unterscheidbar sind und auch untereinander deutlich unterscheidbar sind. Dies wiederum erhöht eine Bedienbarkeit erheblich.

Es ist eine Ausgestaltung, dass aktuell nicht nutzerauswählbare Bedienfelder nicht leuchten. Dadurch wird eine Bedienbarkeit für einen Nutzer noch weiter erhöht. In diesem Fall existieren also nur die Helligkeitsniveaus "dunkel", "schwach" und "hell", o.ä.

Es ist eine Weiterbildung, dass die Schaltung oder Elektronik der LED-Kettenelektronik dazu eingerichtet ist, die Bedienfelder auf eine Betätigung zu überwachen, und dazu eingerichtet ist, bei Betätigung eines nutzerauswählbaren Bedienfelds eine diesem Bedienfeld zugehörige Aktion auszulösen. Die ausgelöste Aktion kann z.B. eine Änderung eines Helligkeitsniveaus des betätigten und/oder anderer Bedienfelder umfassen und/oder kann eine Aussendung einer Nachricht, dass ein bestimmtes Bedienfeld betätigt worden ist, an eine externe Einheit (z.B. an eine Steuereinrichtung eines Haushaltsgeräts) umfassen.

Es ist eine Ausgestaltung, dass den Selektionsfeldern selektionsunabhängig jeweils mindestens eine typische Fingerkontaktbreite zugeordnet ist. Dadurch wird sichergestellt, dass sich die Selektionsfelder immer - d.h., auch wenn ein anderes Selektionsfeld aktuell ausgewählt ist - einer typischen Fingerkontaktbreite zugeordnet ist. Diese Zuordnung kann dadurch erreicht werden, dass ein Abstand zu benachbarten Selektionsfeldern entsprechend groß ist und/oder das Selektionsfeld selbst entsprechend breit ist. Dies kann auch so ausgedrückt werden, dass ein Abstand von der Mitte des Selektionsfelds zu dem Rand eines benachbarten Selektionsfelds mindestens einer halben Fingerkontaktbreite entspricht.

Es ist eine Weiterbildung, dass die Selektionsfelder immer zumindest schwach hinterleuchtet sind, also im normalen Betrieb immer hinterleuchtet sind oder nie dunkelgeschaltet sind.

Es ist eine Ausgestaltung, dass die Einstellfelder zumindest eines gleichen Bedienstrangs dazu eingerichtet sind, verschiedene Werte eines bestimmten Betriebsparameters auszuwählen. So lässt sich eine besonders einfache Benutzerführung und Bedienbarkeit erreichen. Mögliche Betriebsparameters können beispielsweise eine Temperatur, eine Feuchtigkeit, eine Leistungsstufe, usw. umfassen. Dass die Einstellfelder entsprechend eingerichtet sind, kann z.B. umfassen, dass deren Masken und damit die bei Hinterleuchtung durch einen Nutzer erkennbare Lichtinformation entsprechend ausgestaltet ist. So können im Fall eines Betriebsparameters in Form einer Kühltemperatur eines Kühlteils eines Kühlschranks die Lichtinformationen als Temperaturwerte "2°C", "4°C", "6°C" und "8°C" geformt sein.

Es ist eine Weiterbildung, dass die Selektionsfelder bei Hinterleuchtung eine Lichtinformation aufweisen oder abstrahlen, welche auf den durch die Einstellfelder dieses Bedienstrangs einstellbaren Betriebsparameter hinweist. So kann im Fall eines Betriebsparameters in Form einer Kühltemperatur eines Kühlteils eines Kühlschranks die Lichtinformation des zugehörigen Selektionsfelds als "Kühlteil", "Cooler", usw. dargestellt werden.

Es ist eine Ausgestaltung, dass die LED-Kettenelektronik zusätzlich mindestens ein Bedienfeld in Form eines Kombinationsfelds aufweist, das für mehrere ausgewählte Bedienstränge nutzerauswählbar ist oder mehreren Bediensträngen zugeordnet ist. Dadurch brauchen im mehreren Bediensträngen vorkommende gleiche Bedienfelder nur einmal dargestellt zu werden, wodurch sich eine weitere Platz- und Kostenreduktion ergibt. Beim Umschalten zwischen zwei Bediensträngen, die das gleiche Kombinationsfeld aufweisen, kann das Kombinationsfeld hinterleuchtet bleiben oder alternativ kurz deaktiviert und dann wieder aktiviert werden.

Es ist eine Weiterbildung, dass die LED-Kettenelektronik als eine Bedienvorrichtung für ein Haushaltsgerät vorgesehen oder eingerichtet ist.

Die Aufgabe wird auch gelöst durch ein Haushaltsgerät, das mindestens eine LED-Kettenelektronik wie oben beschrieben aufweist. Das Haushaltsgerät kann analog zu der LED-Kettenelektronik ausgebildet werden und weist die gleichen Vorteile auf.

Es ist eine Ausgestaltung, dass das Haushaltsgerät ein Kühlgerät ist. Dadurch wird der Vorteil erreicht, dass aufgrund er geringen Baugröße der LED-Kettenelektronik eine geringe Isolationsschwächung auftritt.

Es ist eine Ausgestaltung, dass für den Fall, dass das Haushaltsgerät ein Kühlgerät mit einem Kühlteil und einem Gefrierteil umfasst, die den Bediensträngen zugeordneten Betriebsparameter eine Temperatur in dem Kühlteil und eine Temperatur in dem Gefrierteil umfassen. Dadurch lassen sich die für einen Nutzer wichtigsten Einstellungen mittels einer einzigen LED-Kettenelektronik wie oben beschrieben vornehmen. Es ist eine Weiterbildung, dass die LED-Kettenelektronik mindestens ein Kombinationsfeld aufweist, das zur Einstellung entsprechender Funktionen oder Werte für beide Teile auswählbar ist, z.B. mindestens ein Kombinationsfeld "Super", "Eco", usw.

Jedoch kann das Haushaltsgerät auch ein beliebiges anderes Haushaltsgerät sein, beispielsweise ein Gargerät, ein Spülgerät, ein Wäschebehandlungsgerät oder ein anderes Haushalts-Großgerät. Das Haushaltsgerät kann aber auch ein Haushalts-Kleingerät wie eine Kaffeemaschine usw. sein. Das Haushaltsgerät ist insbesondere ein Küchengerät.

Es ist eine Weiterbildung, dass das Haushaltsgerät mindestens einen Behandlungsraum (z.B. einen Kühlraum, Gefrierraum, Garraum, Spülraum, Wäschetrommel usw.) aufweist und die LED-Kettenelektronik in einer den Behandlungsraum verschließenden Tür angeordnet ist, insbesondere in oder an einer Außenseite der Tür. Die LED-Kettenelektronik kann z.B. horizontal oder vertikal ausgerichtet sein.

Die Aufgabe wird außerdem gelöst durch ein Verfahren zum Betreiben einer LED-Kettenelektronik wie oben beschrieben, bei dem
- die Bedienfelder auf ihre Betätigung überwacht werden,
- falls eine Betätigung oder Auswahl eines Selektionsfelds erkannt wird, die zu dem gleichen Bedienstrang zugehörigen Einstellfelder leuchtend zur Auswahl aktiviert oder geschaltet werden und die übrigen Einstellfelder unter Dunkelschaltung deaktiviert werden und
- falls eine Betätigung eines auswählbaren oder aktiven Einstellfelds erkannt wird, dieses hell leuchtend eingestellt wird und eine diesem Einstellfeld zugeordnete Aktion ausgelöst wird.

Das Verfahren kann analog zu der LED-Kettenelektronik und/oder dem Haushaltsgerät ausgebildet werden und weist die gleichen Vorteile auf.

Dass zu einem Selektionsfeld zugehörige Einstellfelder leuchtend zur Auswahl aktiviert (oder auch nur einfach "aktiviert" werden), umfasst, dass diese Einstellfelder für einen Nutzer erkennbar hinterleuchtet werden und für sie bei Nutzerbetätigung eine Aktion ausgelöst werden kann. Die aktivierten Einstellfelder können in einer Variante schwach leuchten, falls der Betriebs des Haushaltsgeräts durch die jeweils zugehörige Aktion geändert oder variiert wird, und hell leuchten, falls das Haushaltsgerät aktuell bereits entsprechend der zugehörigen Aktion betrieben wird. Beispielsweise kann für einen Kühlschrank bei Aktivierung eines zu einem Kühlteil oder einem Gefrierteil gehörigen Selektionsfelds die zugehörige Kühltemperatur eingestellt werden. Dazu leuchtet dasjenige Einstellfeld, das der aktuell eingestellten Kühltemperatur entspricht, hell auf, während die anderen Einstellfelder nur schwach leuchten.

Es ist eine Ausgestaltung, dass mit Betätigung eines Selektionsfelds dieses hell leuchtend eingestellt wird, während das mindestens eine andere Selektionsfeld schwach leuchtend eingestellt wird.

Auch ist es eine Weiterbildung, dass das Haushaltsgerät al solches dazu eingerichtet ist, mit Betätigung eines auswählbaren Einstellfelds oder - falls vorhanden - Kombinationsfelds eine entsprechende Aktion oder Funktion auszulösen, z.B. eine Solltemperatur zu ändern, einen Schnellkühlvorgang zu starten usw. Beispielsweise kann dazu von einer Steuereinrichtung des Haushaltsgeräts eine Nachricht von der LED-Kettenelektronik empfangen worden sein, dass ein bestimmtes auswählbares Einstellfeld oder- falls vorhanden - Kombinationsfeld betätigt worden ist und beruhend daraus eine Steuerung des Haushaltsgeräts anpassen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt in Frontansicht eine Skizze einer Tür eines Kühlschranks mit einer erfindungsgemäßen LED-Kettenelektronik gemäß einem ersten Ausführungsbeispiel;
- Fig.2: zeigt in Frontansicht eine Skizze der LED-Kettenelektronik gemäß dem ersten Ausführungsbeispiel in einem ersten Zustand;
- Fig.3: zeigt in Frontansicht eine Skizze der LED-Kettenelektronik gemäß dem ersten Ausführungsbeispiel in einem zweiten Zustand;
- Fig.4: zeigt in Frontansicht eine Skizze der LED-Kettenelektronik gemäß dem ersten Ausführungsbeispiel in einem dritten Zustand;
- Fig.5: zeigt in Frontansicht eine Skizze einer Tür eines Kühlschranks mit einer erfindungsgemäßen LED-Kettenelektronik gemäß einem zweiten Ausführungsbeispiel;
- Fig.6: zeigt eine Skizze von zwei in Draufsicht auf eine Bedienoberfläche hintereinander angeordneten nicht erfindungsgemäßen LED-Kettenelektroniken;
- Fig.7: zeigt eine Skizze von zwei in Draufsicht auf eine Bedienoberfläche nebeneinander angeordneten nicht erfindungsgemäßen LED-Kettenelektroniken; und
- Fig.8: zeigt eine Skizze eines Gedankenablaufs zum Erlangen einer besonders kompakten LED-Kettenelektronik.

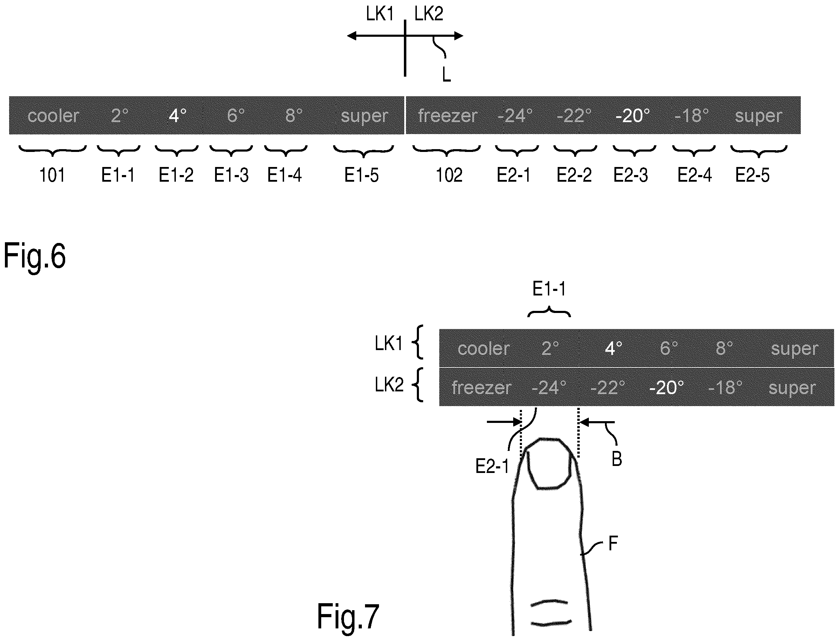

**Fig.6** zeigt eine Skizze von zwei in Draufsicht auf ihre Bedienoberflächen hintereinander angeordnete, bandförmige LED-Kettenelektroniken LK-1 und LK-2 für ein Kühlgerät mit einem Kühlteil oder "Kühlkompartment" und einem Gefrierteil oder "Gefierkompartment". Die LED-Kettenelektroniken LK-1 und LK-2 sind außenseitig in einer Tür des Kühlteils angeordnet.

Eine erste LED-Kettenelektronik LK-1 ist zur Einstellung einer Soll-Kühltemperatur des Kühlteils vorgesehen und weist dazu in Längserstreckung L hintereinander angeordnet ein Anzeigefeld 102, vier Einstellfelder E1-1 bis E1-4 zum Einstellen zugehöriger Sollwerte und ein Einstellfeld E1-5 zum Einstellen einer Sonderfunktion zum besonders schnellen Abkühlen des Kühlteils auf. Die Felder 101, E1-1 bis E1-4 und E1-5 sind hinterleuchtet und stellen dann durch entsprechende Maskierungen Leuchtinformation dar, z.B. das Anzeigefeld 101 die Leuchtinformation "cooler", um einen Nutzer darauf hinzuweisen, dass diese LED-Kettenelektronik LK-1 zum Einstellen der Soll-Kühltemperatur des Kühlteils dient, die Einstellfelder E1-1 bis E1-4 die zugeordneten Soll-Temperaturwerte und das Einstellfeld E1-5 die Leuchtinformation "super". Zumindest die Einstellfelder E1-1 bis E1-5 sind als "Direct Touch"-Felder ausgebildet, so dass bei deren Betätigung die damit verknüpfte Funktion oder Aktion ausgelöst wird.

Speziell können die Felder 101, E1-1 bis E1-4 und E1-5 immer schwach hinterleuchtet sein oder schwach leuchten, falls der Betrieb des Kühlgeräts durch die jeweils zugehörige Aktion geändert oder variiert wird, und hell leuchten, falls das Kühlgerät aktuell bereits entsprechend der zugehörigen Aktion betrieben wird. Ist das Kühlgerät beispielsweise bereits so eingestellt, dass seine Soll-Kühltemperatur auf 4° eingestellt ist, leuchtet wie gezeigt nur das zugehörige Einstellfeld E1-2 hell. Würde ein Nutzer nun z.B. das mit der Leuchtinformation "6°" versehene Einstellfeld E1-3 drücken, würde die Soll-Kühltemperatur auf 6° umgestellt werden, usw.

Eine zweite LED-Kettenelektronik LK-2 ist analog zur Einstellung einer Soll-Kühltemperatur des Gefrierteils eingerichtet, und zwar mit einem Anzeigefeld 102 ("freezer"), vier Einstellfeldern E2-1 bis E2-4 zum Einstellen zugehöriger Sollwerte und ein Einstellfeld E2-5 zum Einstellen einer Sonderfunktion zum besonders schnellen Abkühlen des Gefrierteils.

Die beiden LED-Kettenelektroniken LK-1 und LK2 nehmen in der gezeigten Anordnung eine große Breite auf der Tür ein.

**Fig.7** zeigt eine Skizze von zwei in Draufsicht auf ihre Draufsicht auf ihre Bedienoberflächen nun nebeneinander angeordneten LED-Kettenelektroniken LK-1, LK-2. Die beiden LED-Kettenelektroniken LK-1, LK-2 nehmen nun im Vergleich zu der Anordnung aus Fig.6 an der Tür eine geringere Breite, aber doppelte Höhe ein.

Für beide LED-Kettenelektroniken LK-1, LK-2 gilt unabhängig von deren Anordnung, dass die Einstellfelder E1-1 bis E1-5 und E2-1 bis E2-5 so weit voneinander entfernt sind, dass innerhalb einer typischen Fingerkontaktbreite B (von insbesondere zwischen 15 mm und 20 mm) bei Betätigung der LED-Kettenelektronik LK-1 oder LK-2 nur eines der Einstellfelder E1-1 bis E1-5 und E2-1 bis E2-5 betätigt wird. Dies kann auch so ausgedrückt werden, dass ein Abstand zwischen übernächst benachbarten Einstellfeldern der gleichen LED-Kettenelektronik LK-1 bzw. LK-2 (z.B. der Einstellfelder E1-1 und E1-3) gleich oder größer als die Fingerkontaktbreite B ist.

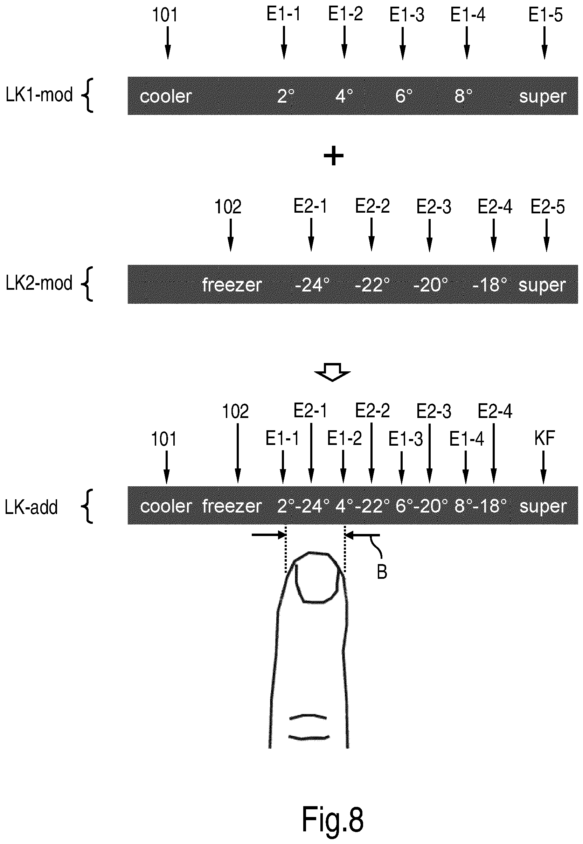

**Fig.8** zeigt eine Skizze eines bereits erfinderischen Gedankenablaufs zum Erlangen einer besonders kompakten LED-Kettenelektronik LK-add. Dazu werden die LED-Kettenelektroniken LK-1 und LK-2 leicht auseinandergezogen und die Positionen der Einstellfelder E2-1 bis E2-5 der LED-Kettenelektronik LK-2 so entlang der Längserstreckung L versetzt, dass sich gedanklich eine kombinierte, bezüglich der Einstellfelder E1-1 bis E1-5 und E2-1 bis E2-5 ineinander verschachtelte LED-Kettenelektronik LK-add ergibt.

Die kombinierte LED-Kettenelektronik LK-add weist die gleichen Felder 101, 102, E1-1 bis E1-4 und E2-1 bis E2-4 wie die LED-Kettenelektroniken LK-1 und LK-2 sowie eine Zusammenlegung der in den LED-Kettenelektroniken LK-1 und LK-2 gleich bezeichneten Einstellfelder E1-5 und E2-5 zu einem Kombinationsfeld KF auf. Die Einstellfelder E1-1 bis E1-4 und E2-1 bis E2-4 wechseln sich nun in Längserstreckung ab.

Die kombinierte LED-Kettenelektronik LK-add nimmt merklich weniger Bauraum ein als die beiden LED-Kettenelektroniken LK-1 und LK-2. Jedoch sind die Einstellfelder E1-1 bis E1-4 und E2-1 bis E2-4 nun so eng zusammengerückt, dass mehrere von ihnen sich innerhalb der typischen Fingerkontaktbreite B befinden und deshalb eine zuverlässige Bedienung nach der in Fig. 6 und Fig.7 beschriebenen Methode nicht mehr gegeben ist. Darüber hinaus ist durch die enge und abwechselnde Stellung der Einstellfelder E1-1 bis E1-4 und E2-1 bis E2-4 die Übersichtlichkeit herabgesetzt.

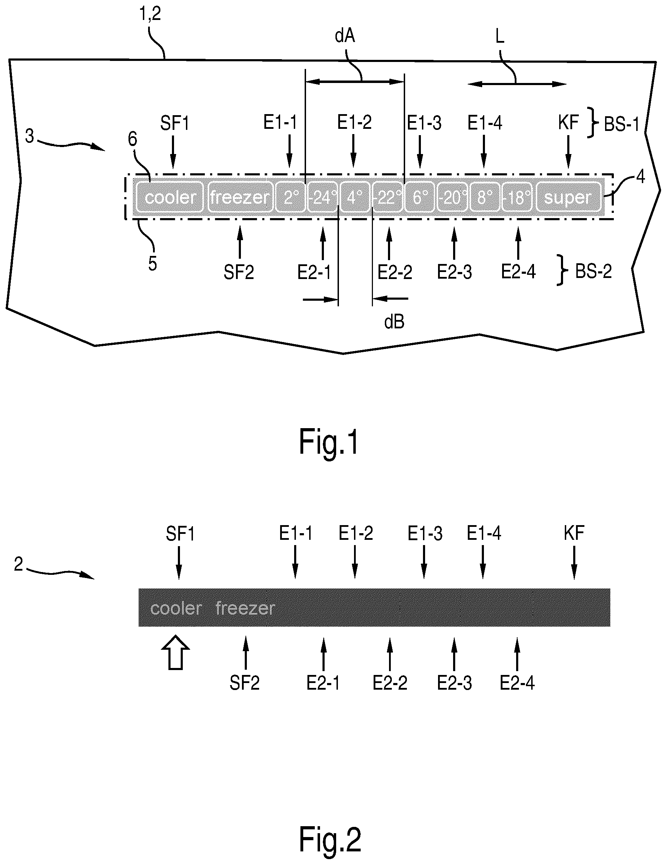

**Fig.1** zeigt in Frontansicht und damit auch in Draufsicht auf ihre Bedienoberflächen eine Skizze einer Tür 1 eines Kühlgeräts 2 mit einer an deren Außenseite angeordneten Bedienvorrichtung in Form einer LED-Kettenelektronik 3 gemäß einem ersten Ausführungsbeispiel. LED-Kettenelektronik 3 weist eine Bedienoberfläche 4 und darunter eine für einen Nutzer nicht sichtbar angeordnete Betriebselektronik 5 auf. Die in einer Reihe angeordneten hinterleuchtbaren Bedienfelder SF1, SF2, E1-1 bis E1-4, E2-1 bis E2-4 und KF der LED-Kettenelektronik 3 können der Anordnung der Bedienfelder der LED-Kettenelektronik LK-add weitgehend entsprechen. Im Gegensatz zu den Anzeigefeldern 101 und 102 der kombinierten LED-Kettenelektronik LK-add sind jedoch die analog positionierten Felder SF1 und SF2 nun berührungsempfindliche Selektionsfelder. Zudem ist die Betriebselektronik 5 für einen anderen Betrieb eingerichtet (z.B. programmiert oder verdrahtet) ist als bei der LED-Kettenelektronik LK-add.

Die LED-Kettenelektronik 3 weist hier zwei Bedienstränge BS-1 und BS-2 auf, wobei dem ersten Bedienstrang BS-1 die Bedienfelder SF1, E1-1 bis E1-4 und KF zugeordnet sind und dem zweiten Bedienstrang BS-2 die SF2, E2-1 bis E2-4 und KF zugeordnet sind. Die beiden Bedienstränge BS-1 und BS-2 unterscheiden sich somit in ihren Selektionsfeldern SF1 bzw. SF2 sowie in ihren exklusiven Einstellfeldern E1-1 bis E1-4 bzw. E2-1 bis E2-4. Sie haben aber ein Kombinationsfeld KF gemeinsam. Die Einstellfelder E1-1 bis E1-4 bzw. E2-1 bis E2-4 der beiden Bedienstränge sind wechselweise nebeneinander angeordnet. Im Einzelnen ist der erste Bedienstrang BS-1 zur Einstellung einer Soll-Kühltemperatur eines Kühlraums des Kühlgeräts 2 und der zweite Bedienstrang BS-2 mit den Bedienfeldern SF2, E2-1 bis E2-4 und KF zur Einstellung einer Soll-Kühltemperatur eines Gefrierteils vorgesehen.

Den Bedienfeldern SF1, SF2, E1-1 bis E1-4, E2-1 bis E2-4 und KF sind jeweilige physikalische Touchfelder 6 zugeordnet, die für einen Nutzer nicht sichtbar sind. Jedem der Bedienfelder SF1, SF2, E1-1 bis E1-4, E2-1 bis E2-4 und KF ist eine unterschiedliche optische Maske zugeordnet, durch welche von dem jeweiligen Bedienfeld SF1, SF2, E1-1 bis E1-4, E2-1 bis E2-4 und KF Leuchtinformation über seine Funktion abstrahlbar ist. Die den Selektionsfeldern SF1 und SF2 sowie dem Kombinationsfeld KF zugeordneten Touchfelder 6 entlang der Längserstreckung L sind jeweils so breit wie die typische Fingerkontaktbreite B. Die den Einstellfeldern E1-1 bis E1-4 und E2-1 bis E2-4 sind hingegen merklich kürzer. Speziell ist ein Abstand dA zwischen übernächst benachbarten Einstellfeldern E1-1 bis E1-4 bzw. E2-1 bis E2-4 des gleichen Bedienstrangs BS-1, BS-2 gleich oder größer als die typische Fingerkontaktbreite B, wie hier anhand der Einstellfelder E1-1 und E1-3 gezeigt. Ein Abstand dB zwischen benachbarten Einstellfeldern E1-1 bis E1-4 bzw. E2-1 bis E2-4 des gleichen Bedienstrangs BS-1, BS-2 ist hingegen kleiner ist als die typische Fingerkontaktbreite B, wie hier anhand der Einstellfelder E2-1 und E2-2 gezeigt.

Durch Betätigung eines der Selektionsfelder SF1, SF2 werden die zugehörigen Einstellfelder E1-1 bis E1-4 bzw. E2-1 bis E2-4 des gleichen Bedienstrangs BS-1 oder BS-2 zur Auswahl durch einen Nutzer aktiviert, während die Einstellfelder E2-1 bis E2-4 bzw. E1-1 bis E1-4 des jeweils anderen Bedienstrangs BS-2 bzw. BS-1 deaktiviert werden, wie im Folgenden genauer ausgeführt. Da das Kombinationsfeld KF zu beiden Bediensträngen BS-1 und BS-2 gehört, wird oder bleibt es mit Betätigung beider Selektionsfelder SF1, SF2 aktiviert.

Mittels der Betriebselektronik 5 werden Betätigungen der Bedienfelder SF1, SF2, E1-1 bis E1-4, E2-1 bis E2-4 und KF erkannt. Auch ist die Betriebselektronik 5 dazu eingerichtet, mindestens eine zugehörige Aktion auszulösen, falls das zugehörige Bedienfeld BS-1, BS-2 bei Betätigung durch einen Nutzer auswählbar war.

**Fig.2** zeigt in Frontansicht eine Skizze der LED-Kettenelektronik 3 in einem ersten Zustand, nämlich dem Warte- oder Standby-Zustand. Der Standby-Zustand wird beispielsweise eingenommen, wenn ein Nutzer seit einiger Zeit die LED-Kettenelektronik 3 nicht betätigt hat. Die Selektionsfelder SF1 und SF2 sind für eine Betätigung durch einen Nutzer auswählbar und leuchten schwach. Die übrigen Bedienfelder E1-1 bis E1-4 , E2-1 bis E2-4 und KF sind deaktiviert und leuchten somit nicht und sind auch nicht zur Betätigung auswählbar. Drückt ein Nutzer auf die nicht nutzerauswählbaren Bedienfelder E1-1 bis E1-4 , E2-1 bis E2-4 und KF, wird die Betätigung zwar von der Betriebselektronik 5 erkannt, aber es wird keine damit verbundene oder verknüpfte Aktion ausgelöst. Nichtleuchtende Bedienfelder sind vorteilhafterweise gegenüber dem Hintergrund der Bedienoberfläche 4 für einen Nutzer nicht sichtbar.

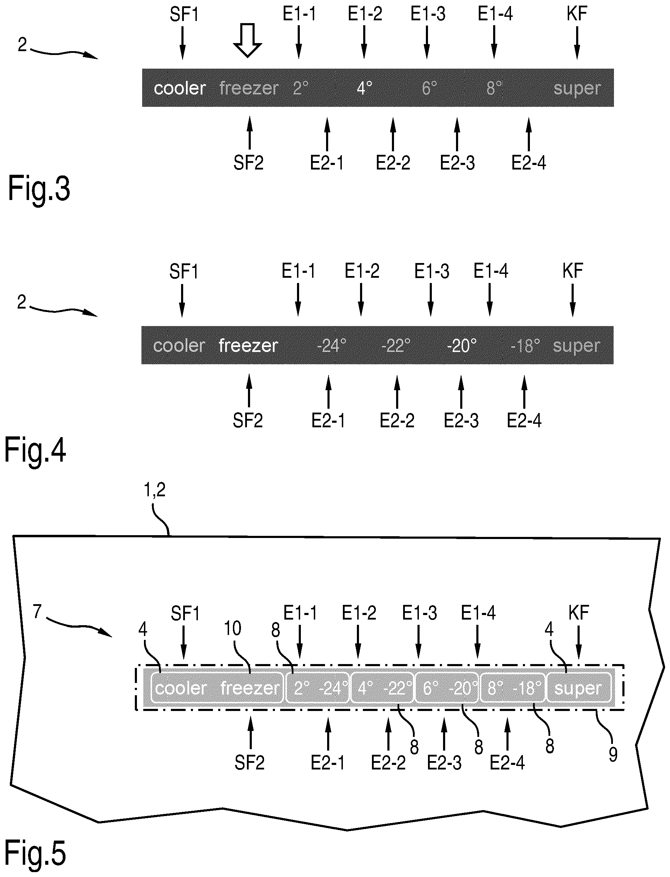

Wenn ein Nutzer mit seinem Finger F auf eines der auswählbaren Selektionsfelder SF1 und SF2 drückt (hier beispielsweise auf das Selektionsfeld SF1, wie durch den breiten Pfeil angedeutet), wird dies durch die Betriebselektronik 5 erkannt. Die Betriebselektronik 5 bewirkt dann, dass dieses Selektionsfeld SF1 hell hinterleuchtet wird, wie in Fig.3 gezeigt. Da das andere Selektionsfeld SF2 weiterhin nutzerauswählbar bleibt, aber aktuell nicht ausgewählt ist, bleibt es schwach hinterleuchtet. Insbesondere ist nun der Zustand gegeben, bei dem die Soll-Temperaturwert in dem Kühlteil einstellbar ist.

Mit Betätigung des Selektionsfelds SF1 werden mittels der Betriebselektronik 5 auch die zu dem gleichen Bedienstrang BS-1 gehörigen Bedienfelder E1-1 bis E1-4 und KF aktiviert, also hinterleuchtet und zur Auswahl durch einen Nutzer geschaltet. Die Bedienfelder E1-1, E1-3, E1-4 und KF sind dabei schwach hinterleuchtet, da die mit ihnen verknüpften Aktionen oder Funktionen / Einstellwerte aktuell am Kühlgerät 2 nicht eingestellt sind. Hingegen ist das Einstellfeld E1-2 hell hinterleuchtet, da der damit verknüpfte Einstellwert, nämlich der Soll-Temperaturwert in dem Kühlteil von 4°C aktuell an dem Kühlgerät 2 eingestellt ist.

Möchte ein Nutzer den Soll-Temperaturwert ändern oder eine Schnellkühlung bewirken, so kann er eines der anderen Bedienfelder E1-1, E1-3, E1-4 bzw. KF durch Betätigung (Berühren, Drücken usw.) auswählen. Mit Erkennen der Betätigung durch die Betriebselektronik 5 wird dieses Bedienfeld E1-1, E1-3, E1-4 oder KF hell geschaltet und die zugehörige Aktion (z.B. eine Umstellung des Soll-Temperaturwert oder ein Start der Schnellkühlung) ausgelöst. Das zuvor hell leuchtend geschaltete Einstellfeld E1-2 wird schwach leuchtend geschaltet. Das Auslösen einer Aktion durch die LED-Kettenelektronik 3 kann ein Melden einer entsprechenden Betätigung an eine zentrale Steuereinrichtung des Kühlgeräts 2 umfassen, die als Aktion dann den Kühlbetrieb des Kühlteils umstellt.

Ist durch die Betriebselektronik 5 für eine vorgegebene Zeitdauer keine Betätigung eines der Bedienstränge BS-1 und/oder BS-2 festgestellt worden, wird zurück in den Standby-Zustand geschaltet.

Wird jedoch innerhalb der vorgegebenen Zeitdauer das andere Selektionsfelds SF2 betätigt, wird es hell hinterleuchtet, während das Selektionsfeld SF1 nur noch schwach hinterleuchtet wird, wie in **Fig.4** gezeigt. Zusätzlich werden die dem ersten Bedienstrang BS-1 zugeordneten Einstellfelder E1-1 bis E1-4 deaktiviert und die dem zweiten Bedienstrang BS-2 zugeordneten Einstellfelder E1-1 bis E1-4 aktiviert, wobei hier beispielhaft das Einstellfeld E1-3 hell leuchtet, falls die Soll-Temperatur des Gefrierteils aktuell bei -20°C eingestellt ist. Das Kombinationsfeld KF bleibt hinterleuchtet. Insbesondere ist nun der Zustand gegeben, bei dem die Soll-Temperaturwert in dem Gefrierteil einstellbar ist.

In beiden in Fig.3 und Fig.4 gezeigten Zuständen mit aktiviertem ersten Bedienstrang BS-1 bzw. aktiviertem zweiten Bedienstrang BS-2 wird durch die Deaktivierung der Einstellfelder E1-1 bis E1-4 bzw. E2-1 bis E2-4 des jeweils nicht ausgewählten Bedienstrangs BS-1, BS-2 ein Abstand der auswählbaren Einstellfelder E1-1 bis E1-4 bzw. E2-1 bis E2-4 geschaffen, der so groß ist, dass die sie zuverlässig bedienbar sind. Selbst wenn innerhalb der typischen Fingerkontaktbreite B nicht auswählbare Einstellfelder E2-1 bis E2-4 bzw. E1-1 bis E1-4 betätigt werden, ist die Betriebselektronik 5 dazu eingerichtet (z.B. programmiert), diese Betätigungen zu ignorieren. Dadurch, dass die nicht auswählbaren Einstellfelder E-1 bis E2-4 bzw. E1-1 bis E1-4 nicht hinterleuchtet werden, treten sie auch optisch nicht in Erscheinung, so dass die auswählbaren Einstellfelder E1-1 bis E1-4 bzw. E2-1 bis E2-4 übersichtlich angeordnet und damit optisch gut unterscheidbar sind.

**Fig.5** zeigt in Frontansicht eine Skizze der Tür 2 des Kühlschranks 1 mit einer erfindungsgemäßen LED-Kettenelektronik 7 gemäß einem zweiten Ausführungsbeispiel anstelle der LED-Kettenelektronik 3. Die Masken der LED-Kettenelektronik 7 sind analog zu den Masken der LED-Kettenelektronik 3 angeordnet, und die zugehörigen Bedienfelder SF1, SF2, E1-1 bis E1-4, E2-1 bis E2-4 und KF werden wie bei der LED-Kettenelektronik 3 hinterleuchtet.

Im Gegensatz zu der LED-Kettenelektronik 3 ist zwei benachbarten Einstellfeldern E1-1, E2-1; E1-2, E2-2 usw. unterschiedlicher Bedienstränge BS-1, BS-2 jeweils ein gemeinsames Touchfeld 8 zugeordnet. Wird also eines der Selektionsfelder SF1 oder SF2 betätigt, leuchten wie bei der LED-Kettenelektronik 3 die den Bediensträngen BS-1 bzw. BS-2 zugeordneten Bedienfelder E1-1 bis E1-4 bzw. E2-1 bis E2-4 auf. Die Betriebselektronik 10 ist dazu eingerichtet, die Betätigung eines Touchfelds 8 als Betätigung des dem ausgewählten Bedienstrang BS-1 bzw. BS-2 zugehörigen Bedienfelds E1-1 bis E1-4 bzw. E2-1 bis E2-4 zu interpretieren.

Ein weiterer Unterschied zu der LED-Kettenelektronik 3 besteht darin, dass beiden Selektionsfelder SF1 und SF2 ein gemeinsames Touchfeld 10 hinterlegt ist. Ein Nutzer kann zur Auswahl eines gewünschten Selektionsfelds SF1 und SF2 zwischen diesen toggeln: Beispielsweise leuchten im Standby-Zustand die den Selektionsfeldern SF1 und SF2 zugeordneten Leuchtinformationen "cooler" bzw. "freezer" nur schwach.

Betätigt ein Nutzer das Touchfeld 10 an beliebiger Stelle (also an einem beliebigen der beiden Selektionsfelder), wird zuerst das Selektionsfeld SF1 mit den zugehörigen Einstellfeldern E1-1 bis E1-4 sowie dem Kombinationsfeld KF zur Auswahl aktiviert, und zwar analog zu der LED-Kettenelektronik 3. Dabei wird auch die Leuchtinformationen "cooler" hell leuchtend geschaltet. Der Nutzer kann nun die Einstellfelder E1-1 bis E1-4 und das Kombinationsfeld KF auswählen oder betätigen.

Betätigt der Nutzer das Touchfeld 10 nochmals an beliebiger Stelle, wird dann das Selektionsfeld SF2 mit den zugehörigen Einstellfeldern E2-1 bis E2-4 sowie dem Kombinationsfeld KF zur Auswahl aktiviert, und zwar analog zu der LED-Kettenelektronik 3. Dabei wird die Leuchtinformationen "freezer" hell leuchtend geschaltet, während die Leuchtinformationen "cooler" schwach leuchtend geschaltet wird. Der Nutzer kann nun die Einstellfelder E2-1 bis E2-4 und das Kombinationsfeld KF auswählen oder betätigen.

Betätigt der Nutzer das Touchfeld 10 nochmals, wird wieder der Bedienstrang BS-1 aktiviert, bei erneuter Betätigung wieder der Bedienstrang BS-2, usw.

Ein Nutzer kann dann zwischen den Selektionsfeldern durch mehrfaches Betätigen des Touchfelds nacheinander durchschalten oder "toggeln". Dabei wird das aktuell ausgewählte Selektionsfeld einem Nutzer durch helleres Leuchten angezeigt. Im letzteren Fall werden also mehrere Selektionsfelder als nacheinander durchschaltbare Bedienfelder bereitgestellt.

Ist durch die Betriebselektronik 9 für eine vorgegebene Zeitdauer keine Betätigung eines der Bedienstränge BS-1 und/oder BS-2 festgestellt worden, wird zurück in den Standby-Zustand geschaltet.

Selbstverständlich ist die vorliegende Erfindung nicht auf das gezeigte Ausführungsbeispiel beschränkt.

So kann die Erfindung in analoger Weise auch auf drei oder mehr Bedienstränge erweitert werden.

Auch können allgemein pro Bedienstrang mehr als vier Einstellfelder vorliegen.

Zudem kann sich die Zahl der Einstellfelder für unterschiedliche Bedienstränge allgemein unterscheiden.

Die LED-Kettenelektronik kann beispielsweise horizontal oder vertikal an dem Haushaltsgerät angebracht sein. Bei vertikaler Ausrichtung sind die Lichtinformationen im Gegensatz zu den in den Figuren dargestellten Ausführungsbeispielen um 90° gedreht.

Ferner kann können toggelbare Selektionsfelder wie in der LED-Kettenelektronik 7 gezeigt mit Einstellfeldern wie in der Kettenelektronik 3 gezeigt kombiniert werden. Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Tür
- 2: Kühlgerät
- 3: LED-Kettenelektronik
- 4: Bedienoberfläche
- 5: Betriebselektronik
- 6: Touchfeld
- 7: LED-Kettenelektronik
- 8: Touchfeld
- 9: Betriebselektronik
- 10: Touchfeld
- 101: Anzeigefeld
- 102: Anzeigefeld
- B: Fingerkontaktbreite
- BS-1: Erster Bedienstrang
- BS-2: Zweiter Bedienstrang
- E1-1 bis E1-5: Einstellfelder
- E2-1 bis E2-5: Einstellfelder
- KF: Kombinationsfeld
- L: Längserstreckung
- LK1: Erste LED-Kettenelektronik
- LK2: Zweite LED-Kettenelektronik
- LK-add: Kombinierte LED-Kettenelektronik
- SF1: Selektionsfeld des ersten Bedienstrangs
- SF2: Selektionsfeld des zweiten Bedienstrangs

## Patentansprüche

1. LED-Kettenelektronik (3; 7) für ein Haushaltsgerät (2), mit mehreren berührungsempfindlichen, in einer Reihe angeordneten Bedienfeldern (SF1, SF2, E1-1 - E1-4, E2-1 - E2-4, KF), wobei
- die Bedienfelder (SF1, SF2, E1-1 - E1-4, E2-1 - E2-4, KF) mindestens zwei Selektionsfelder (SF1, SF2) umfassen, bei deren Betätigung zu einem gleichen Bedienstrang (BS-1, BS-2) gehörige Bedienfelder in Form von Einstellfeldern (E1-1 - E1-4, E2-1 - E2-4) exklusiv durch einen Nutzer auswählbar werden,
- die Einstellfelder (E1-1 - E1-4, E2-1 - E2-4) unterschiedlicher Bedienstränge (BS-1, BS-2) wechselweise nebeneinander angeordnet sind,
- nicht nutzerauswählbare Einstellfelder (E1-1 - E1-4, E2-1 - E2-4) schwächer leuchten als nutzerauswählbare, aber nicht ausgewählte Einstellfelder (E1-1 - E1-4, E2-1 - E2-4),
- nutzerauswählbare, aber nicht ausgewählte Einstellfelder (E1-1 - E1-4, E2-1 - E2-4) schwächer leuchten als nutzerausgewählte Einstellfelder (E1-2, E2-3)
- ein Abstand (dA) zwischen übernächst benachbarten Einstellfeldern (E1-1 - E1-4, E2-1 - E2-4) des gleichen Bedienstrangs (BS-1, BS-2) gleich oder größer als eine typische Fingerkontaktbreite (B) ist und ein Abstand (dB) zwischen benachbarten Einstellfeldern (E1-1 - E1-4, E2-1 - E2-4) des gleichen Bedienstrangs (BS-1, BS-2) kleiner ist als die typische Fingerkontaktbreite (B), wobei die typische Fingerkontaktbreite (B) zwischen 15 mm und 20 mm beträgt,
- jedem Bedienfeld (SF1, SF2, E1-1 bis E1-4, E2-1 bis E2-4 und KF) ein jeweiliges Touchfeld (6) zugeordnet ist oder benachbarten Einstellfeldern (E1-1, E2-1; E1-2, E2-2) unterschiedlicher Bedienstränge (BS-1, BS-2) das gleiche Touchfeld (8) zugeordnet ist, und
- mehreren Selektionsfeldern (SF1, SF2) das gleiche Touchfeld (10) zugeordnet ist und mindestens eines der Selektionsfelder (SF1, SF2) durch mehrfaches Betätigen des Touchfelds (10) auswählbar ist.

2. LED-Kettenelektronik (3; 7) nach einem der vorhergehenden Ansprüche, wobei den Selektionsfeldern (SF1, SF2) selektionsunabhängig jeweils mindestens eine typische Fingerkontaktbreite (B) zugeordnet ist.

3. LED-Kettenelektronik (3; 7) nach einem der vorhergehenden Ansprüche, wobei die Einstellfelder (E1-1 - E1-4, E2-1 - E2-4) zumindest eines gleichen Bedienstrangs (BS-1, BS-2) dazu eingerichtet sind, verschiedene Werte eines bestimmten Betriebsparameters auszuwählen.

4. LED-Kettenelektronik (3; 7) nach einem der vorhergehenden Ansprüche, wobei die LED-Kettenelektronik (3) zusätzlich mindestens ein Bedienfeld (SF1, SF2, E1-1 - E1-4, E2-1 - E2-4, KF) in Form eines Kombinationsfelds (KF) aufweist, das für mehrere ausgewählte Bedienstränge (BS-1, BS-2) nutzerauswählbar ist.

5. LED-Kettenelektronik (3; 7) nach einem der vorhergehenden Ansprüche, wobei nicht nutzerauswählbare Bedienfelder (E1-1 - E1-4, E2-1 - E2-4, KF) nicht leuchten.

6. LED-Kettenelektronik (7) nach einem der vorhergehenden Ansprüche, wobei benachbarten Einstellfeldern (E1-1 - E1-4, E2-1 - E2-4) unterschiedlicher Bedienstränge (BS-1, BS-2) das gleiche Touchfeld (8) zugeordnet ist.

7. Haushaltsgerät (2), insbesondere Kühlgerät, aufweisend mindestens eine LED-Kettenelektronik (3) nach einem der vorhergehenden Ansprüche.

8. Haushaltsgerät (2) nach Anspruch 7 mit einer LED-Kettenelektronik (3) nach Anspruch 6, wobei das Haushaltsgerät (2) ein Kühlgerät ist und die den Bediensträngen (BS-1, BS-2) zugeordneten Betriebsparameter eine Temperatur in einem Kühlteil und eine Temperatur in einem Gefrierteil eines Kühlgeräts umfassen.

9. Haushaltsgerät (2) nach einem der Ansprüche 7 oder 8, wobei die LED-Kettenelektronik (3; 7) an einer Tür (1) des Haushaltsgeräts (2) angeordnet ist.

10. Verfahren zum Betreiben einer LED-Kettenelektronik (3) nach einem der Ansprüche 1 bis 6, bei dem
- die Bedienfelder (SF1, SF2, E1-1 - E1-4, E2-1 - E2-4, KF) auf ihre Betätigung überwacht werden,
- falls eine Auswahl eines Selektionsfelds (SF-1, SF-2) erkannt wird, die zugehörigen Einstellfelder (E1-1 - E1-4, E2-1 - E2-4) leuchtend zur Auswahl aktiviert werden und die übrigen Einstellfelder (E1-1 - E1-4, E2-1 - E2-4) unter Dunkelschaltung deaktiviert werden und
- falls eine Betätigung eines aktiven Einstellfelds (E1-1 - E1-4, E2-1 - E2-4) erkannt wird, dieses hell leuchtend eingestellt wird und eine diesem Einstellfeld (E1-1 - E1-4, E2-1 - E2-4) zugeordnete Aktion ausgelöst wird.

## Claims

1. LED chain electronics (3; 7) for a household appliance (2), having a number of touch-sensitive control panels (SF1, SF2, E1-1 - E1-4, E2-1 - E2-4, KF) arranged in series, wherein
- the control panels (SF1, SF2, E1-1 - E1-4, E2-1 - E2-4, KF) comprise at least two selection fields (SF1, SF2), during the actuation of which control panels associated with an identical control string (BS-1, BS-2) can be selected exclusively by a user in the form of setting fields (E1-1 - E1-4, E2-1 - E2-4),
- the setting fields (E1-1 - E1-4, E2-1 - E2-4) of different control strings (BS-1, BS-2) are arranged alternately next to one another,
- user non-selectable setting fields (E1-1 - E1-4, E2-1 -E2-4) illuminate more weakly than user-selectable but non-selected setting fields (E1-1 - E1-4, E2-1 - E2-4),
- user-selectable, but non-selected setting fields (E1 -1, E1-4, E2-1 - E2-4) illuminate more weakly than user-selected setting fields (E1-2, E2-3)
- a distance (dA) between the next but one adjacent setting fields (E1-1 - E1-4, E2-1 - E2-4) of the same control string (BS-1, BS-2) is equal to or larger than a typical finger contact width (B) and a distance (dB) between adjacent setting fields (E1-1 - E1-4, E2-1 - E2-4) of the same control string (BS-1, BS-2) is smaller than the typical finger contact width (B), wherein the typical finger contact width (B) amounts to between 15 mm and 20 mm,
- a respective touch panel (6) is assigned to each control panel (SF1, SF2, E1-1 to E1-4, E2-1 to E2-4 and KF) or the same touch panel (8) is assigned to adjacent setting fields (E1-1, E2-1; E1-2, E2-2) of different control strings (BS-1, BS-2), and
- the same touch panel (10) is assigned to a number of selection fields (SF1, SF2) and at least one of the selection fields (SF1, SF2) can be selected by repeatedly actuating the touch panel (10).

2. LED chain electronics (3; 7) according to one of the preceding claims, wherein at least one typical finger contact width (B) is assigned in a selection-independent manner in each case to the selection fields (SF1, SF2).

3. LED chain electronics (3; 7) according to one of the preceding claims, wherein the setting fields (E1-1 - E1-4, E2-1 - E2-4) of at least one identical control string (BS-1, BS-2) are designed to select different values of a specific operating parameter.

4. LED chain electronics (3; 7) according to one of the preceding claims, wherein the LED chain electronics (3) additionally has at least one control panel (SF1, SF2, E1-1 - E1-4, E2-1 - E2-4, KF) in the form of a combination field (KF), which can be user-selectable for a number of selected control strings (BS-1, BS-2).

5. LED chain electronics (3; 7) according to one of the preceding claims, wherein not user-selectable control panels (E1-1 - E1-4, E2-1 - E2-4, KF) do not illuminate.

6. LED chain electronics (7) according to one of the preceding claims, wherein the same touch panel (8) is assigned to adjacent setting fields (E1-1 - E1-4, E2-1 - E2-4) of different control strings (BS-1, BS-2).

7. Household appliance (2), in particular refrigeration appliance, having at least one LED chain electronics (3) according to one of the preceding claims.

8. Household appliance (2) according to claim 7 with an LED chain electronics (3) according to claim 6, wherein the household appliance (2) is a refrigeration appliance and the operating parameters assigned to the control strings (BS-1, BS-2) comprise a temperature in a refrigerator part and a temperature in a freezer part of a refrigeration appliance.

9. Household appliance (2) according to one of claims 7 or 8, wherein the LED chain electronics (3; 7) is arranged on a door (1) of the household appliance (2).

10. Method for operating an LED chain electronics (3) according to one of claims 1 to 6, in which
- the control panels (SF1, SF2, E1-1 - E1-4, E2-1 - E2-4, KF) are monitored for their actuation,
- if a selection of a selection field (SF-1, SF-2) is detected, the associated setting fields (E1-1 - E1-4, E2-1 - E2-4) are activated so as to illuminate the selection and the remaining setting fields (E1-1 - E1-4, E2-1 - E2-4) are deactivated and go dark and
- if an actuation of an active setting field (E1-1 - E1-4, E2-1 - E2-4) is detected, this is set to illuminate brightly and an action assigned to this setting field (E1-1 - E1-4, E2-1 - E2-4) is triggered.

## Revendications

1. Dispositif électronique de chaîne de DEL (3, 7) pour un appareil électroménager (2), comprenant plusieurs champs de commande (SF1, SF2, E1-1 - E1-4, E2-1 - E2-4, KF) tactiles, disposés en rangée, dans lequel :
- les champs de commande (SF1, SF2, E1-1 - E1-4, E2-1 - E2-4, KF) comprennent au moins deux zones de sélection (SF1, SF2), et lorsqu'elles sont actionnées, des champs de commande appartenant à la même ligne de commande (BS-1, BS-2) sous forme de champs de réglage (E1-1 - E1-4, E2-1 - E2-4) sont uniquement sélectionnables par un utilisateur,
- les champs de réglage (E1-1 - E1-4, E2-1 - E2-4) de différentes lignes de commande (BS-1, BS-2) sont agencés alternativement l'un à côté de l'autre,
- des champs de réglage (E1-1 - E1-4, E2-1 - E2-4) non sélectionnables par un utilisateur sont plus faiblement éclairés que des champs de réglage (E1-1 - E1-4, E2-1 - E2-4) sélectionnables par un utilisateur, mais non sélectionnés
- des champs de réglage (E1-1 - E1-4, E2-1 - E2-4) sélectionnables par un utilisateur mais non sélectionnés sont plus faiblement éclairés que des champs de réglage (E1-2 - E2-3) sélectionnés par un utilisateur,
- un intervalle (dA) entre des champs de réglage (E1-1 - E1-4, E2-1 - E2-4) avoisinants se suivant en seconde position de la même ligne de commande (BS-1, BS-2) est égal ou supérieur à une largeur de contact de doigt type (B) et un intervalle (dB) entre des champs de réglage (E1-1 - E1-4, E2-1 - E2-4) voisins de la même ligne de commande (BS-1, BS-2) est inférieur à la largeur de contact de doigt type (B), la largeur de contact de doigt type (B) étant entre 15 mm et 20 mm,
- un champ tactile (6) respectif est associé à chaque champ de commande (SF1, SF2, E1-1 à E1-4, E2-1 à E2-4, et KF) ou le même champ tactile (8) est associé à des champs de réglage (E1-1, E2-1 ; E1-2, E2-2) voisins de différentes lignes de commande (BS-1, BS-2), et
- le même champ tactile (10) est associé à plusieurs zones de sélection (SF1, SF2) et au moins une des zones de sélection (SF1, SF2) peut être sélectionnée par un actionnement multiple du champ tactile (10).

2. Dispositif électronique de chaîne de DEL (3, 7) selon l'une des revendications précédentes, dans lequel au moins une largeur de contact de doigt type (B) est affectée respectivement aux zones de sélection (SF1, SF2) indépendamment de la sélection.

3. Dispositif électronique de chaîne de DEL (3, 7) selon l'une des revendications précédentes, dans lequel les champs de réglage (E1-1 - E1-4, E2-1 - E2-4) d'au moins une même ligne de commande (BS-1, BS-2) sont configurés pour sélectionner différentes valeurs d'un paramètre de fonctionnement déterminé.

4. Dispositif électronique de chaîne de DEL (3, 7) selon l'une des revendications précédentes, dans lequel le dispositif électronique de chaîne de DEL (3) comprend en outre au moins un champ de commande (SF1, SF2, E1-1 - E1-4, E2-1 - E2-4, KF) sous forme d'un champ combiné (KF), qui est sélectionnable par un utilisateur pour plusieurs lignes de commande sélectionnées (BS-1, BS-2).

5. Dispositif électronique de chaîne de DEL (3, 7) selon l'une des revendications précédentes, dans lequel des champs de commande (E1-1 - E1-4, E2-1 - E2-4, KF) non sélectionnables par un utilisateur ne sont pas éclairés.

6. Dispositif électronique de chaîne de DEL (7) selon l'une des revendications précédentes, dans lequel le même champ tactile (8) est affecté à des champs de réglage (E1-1 - E1-4, E2-1 - E2-4) voisins de différentes lignes de commande (BS-1, BS-2).

7. Appareil électroménager (2), en particulier appareil frigorifique, comprenant au moins un dispositif électronique de chaîne de DEL (3) selon l'une des revendications précédentes.

8. Appareil électroménager (2) selon la revendication 7 comprenant un dispositif électronique de chaîne de DEL (3) selon la revendication 6, dans lequel l'appareil électroménager (2) est un appareil frigorifique et les paramètres de fonctionnement associés aux lignes de commande (BS-1, BS-2) comprennent une température dans un compartiment de réfrigération et une température dans un compartiment de congélation d'un appareil frigorifique.

9. Appareil électroménager (2) selon l'une des revendications 7 ou 8, dans lequel le dispositif électronique de chaîne de DEL (3, 7) est disposé sur une porte (1) de l'appareil électroménager (2).

10. Procédé de fonctionnement d'un dispositif électronique de chaîne de LED (3) selon l'une des revendications 1 à 6, dans lequel :
- les champs de commande (SF1, SF2, E1-1 - E1-4, E2-1 - E2-4, KF) sont surveillés quant à leur actionnement,
- dans le cas où une sélection d'une zone de sélection (SF-1, SF-2) est détectée, les champs de réglage (E1-1 - E1-4, E2-1 - E2-4) correspondants sont activés et éclairés pour une sélection et les autres champs de réglage (E1-1 - E1-4, E2-1 - E2-4) sont désactivés et commutés en foncé, et
- dans le cas où un actionnement d'un champ de réglage (E1-1 - E1-4, E2-1 - E2-4) actif est détecté, celui-ci est réglé en brillant et une action associée à ce champ de réglage (E1-1 - E1-4, E2-1 - E2-4) est déclenchée.
